# EUROPÄISCHE PATENTSCHRIFT

(11) **EP 3 720 380 B1**
(45) Veröffentlichungstag und Bekanntmachung des Hinweises auf die Patenterteilung: **11.05.2022**
(21) Anmeldenummer: 19708048.4
(22) Anmeldetag: 25.02.2019
(51) Int. Cl.: A61C 5/62

(54) **SCHUTZHÜLLE ALS ÜBERZUGSHÜLLE FÜR EINE MEDIZINISCHE SPRITZE**
PROTECTIVE SLEEVE AS A COVER SLEEVE FOR A MEDICAL SYRINGE
ENVELOPPE PROTECTRICE FORMANT UNE ENVELOPPE EXTÉRIEURE DESTINÉE À UNE SERINGUE MÉDICALE

(30) Priorität: 27.02.2018 DE 102018104375
(43) Veröffentlichungstag der Anmeldung: 14.10.2020
(73) Patentinhaber: Kulzer GmbH, 63450 Hanau (DE)
(72) Erfinder: BALKENHOL, Markus, 63543 Neuberg (DE); SCHARF, Michael, 57074 Siegen (DE)
(74) Vertreter: Bendele, Tanja
(86) Internationale Anmeldenummer: PCT/EP2019/054523
(87) Internationale Veröffentlichungsnummer: WO 2019/166353

(56) Entgegenhaltungen:
- EP-A1- 1 923 086
- EP-B1- 1 923 086
- JP-B2- 6 282 441
- US-A- 5 997 811
- US-A1- 2006 111 677

## Beschreibung

Schutzhülle für eine Spritze mit Spritzenkörper mit proximalem Spritzenauslass und mit einem Spritzenkolben oder Spritzenstempel, wobei die Schutzhülle eine Überzugshülle ist, die außen um den Spritzenkörper anbringbar ist und an der Überzugshülle proximal ein weiterer Auslass umfassend a) einen Aufsatz, b) einen Konnektor oder ein Konnektorsystem, c) ein Lumen, dessen äußerer Umfang aus elastischem Material ist oder d) eine Kanüle vorgesehen ist.

Im medizinischen Alltag gibt es mehrfach verwendbare Spritzen, die in der Regel mit einem Präparat, wie einer dentalen Zusammensetzung, bspw. einem Fissurenversiegler oder einem Wirkstoff, wie einer Retraktionspaste, gefüllt sind. Die Applikation von pastösen oder flüssigen Zubereitungen, wie eines Fissurenversieglers, erfolgt häufig über mehrfach verwendbare Spritzen mit Hilfe von Kanülen. Die Kanülen werden jeweils gewechselt. Die Kanülen werden entweder auf den Spritzenauslass aufgesteckt oder über einen Luer-Lock-Verschluss, der den Spritzenauslass bildet, sicher verankert.

Bei der Applikation in der Mundhöhle kommt es dabei häufig unweigerlich an der Kanüle sowie dem Spritzenkörper zu einem Kontakt mit dem Speichel des Patienten, mit Blut oder anderen Körperflüssigkeiten, wie dem Sulcus Fluid. Die Applikationsspitzen bzw. Kanülen werden nach einmaligem Gebrauch entsorgt. Die Spritzen, enthaltend die vorgenannten Zubereitungen, werden üblicherweise mehrfach bei verschiedenen Patienten angewendet. Folglich ist der Spritzenkörper, vor allem aber der Spritzenauslass an dem die Kanülen angesteckt werden, einer sorgfältigen Desinfektion zu unterziehen. Vor allem in diesem Übergangsbereich und Kontaktbereich zwischen Spritze, Spritzenauslass und Kanüle, die in der Regel als Steckverschluss, Luer-Lock-Verschluss o.ä. ausgebildet sind, kann eine vollständige Desinfektion nicht immer sichergestellt werden, da hier Speichel, Blut oder andere orale Sekrete aufgrund von Kapillarkräften eindringen können. Da die Zubereitungen im Spritzenkörper nicht mit Desinfektionsmitteln in Kontakt kommen dürfen, verbietet sich auch ein Einlegen der Übergangsstelle in eine Desinfektionslösung nach dem Abnehmen der Kanüle/Applikator-Spitze.

US5,997,811 offenbart ein Verfahren zur Verpackung einer sterilen Spritze in einer sterilen Verpackung zum einmaligen Gebrauch. JP6282441B2 offenbart einen medizinischen Injektor mit austauschbarem Düsenaufsatz.

Aufgabe der Erfindung war es, die vorgenannten Kontaminationsproblematiken zu vermeiden und eine mehrfache Verwendung von Spritzen mit Zubereitungen zu ermöglichen, und eine Kontamination / Kreuzinfektion nachfolgender Patienten mit Mikroorganismen, Viren oder Körperflüssigkeiten vorhergehender Patienten zu unterbinden.

Gelöst wurde die Aufgabe mit einer Schutzhülle nach Anspruch 1 sowie einem Kit nach Anspruch 10.

Gegenstand der Erfindung ist eine einmal verwendbare Schutzhülle für eine Spritze mit Spritzenkörper und proximalem Spritzenauslass mit umlaufender Dichtlippe im distalen Bereich, insbesondere für eine Spritze, deren Spritzenkörper mit einer flüssigen oder pastösen pharmazeutischen oder dentalen Zusammensetzung gefüllt ist. Die Schutzhülle weist vorzugsweise proximal einen integrierten weiteren Auslass, umfassend einen integrierten Aufsatz, Konnektor oder eine integrierte Kanüle auf. Die Schutzhülle mit integriertem Aufsatz, Konnektor oder Kanüle wird vor der Verwendung, insbesondere der intraoralen Verwendung über die mehrfach verwendbare Spritze übergezogen und der Aufsatz mit dem Spritzenauslass verbunden. Die Schutzhülle mit integriertem Aufsatz wird vorzugsweise hermetisch und keimdicht an den proximalen Spritzenauslass angebracht, vorzugsweise umhüllt die Schutzhülle hermetisch und keimdicht den Spritzenkörper, insbesondere im proximalen Bereich des Spritzenkörpers. Die Schutzhülle reicht dabei bis zu den Flügeln bzw. dem Griff des Spritzenkörpers und überdeckt dabei den Übergangsbereich zwischen mehrfach verwendbarer Spritze im Bereich des Spritzenkörpers, der im Kontaktbereich der Mundhöhle liegt. Nach der einmaligen Anwendung wird die Schutzhülle mit integriertem Aufsatz oder Lumen, dessen äußerer Umfang aus elastischem Material sein kann, entsorgt. Der Übergangsbereich des Spritzenkörpers kann, sofern erforderlich desinfiziert werden.

Die erfindungsgemäße Schutzhülle vermeidet somit effizient eine Kontamination im Übergangsbereich vom Auslass des Spritzenkörpers bis unter die Griffe bzw. Flügel des Spritzenkörpers. Der nicht geschützte Bereich kann später desinfiziert werden. Der Spritzenauslass des Spritzenkörpers und ggf. der Konnektor oder das Konnektorsystem können mit einem sauberen Verschluss, wie beispielsweise einem Stopfen, verschlossen werden.

Gegenstand der Erfindung ist eine Schutzhülle für eine Spritze mit Spritzenkörper mit proximalem Spritzenauslass, wobei die Schutzhülle eine Überzugshülle ist, die außen um den Spritzenkörper der Spritze anbringbar ist, wobei an der Überzugshülle proximal ein weiterer Auslass umfassend a) einen Aufsatz, wie beispielsweise eine Applikator-Spitze, b) einen Konnektor, c) ein Konnektorsystem, das insbesondere mit einem innenliegenden Filter, vorzugsweise einem Sterilfilter gegen ein Eindringen von Mikroorganismen, wie Bakterien, Viren, Pilzen ausgestattet ist, d) ein Lumen, dessen äußerer Umfang aus starrem oder elastischem Material ist, wie beispielsweise einem Gummiring oder Silikonring, oder e) eine Kanüle vorgesehen ist, wobei die Überzugshülle proximal einen Aufsatz aufweist, wobei der Aufsatz proximal innen in der Überzugshülle 1) ein Innengewinde aufweist und mit einem mechanischen Anschlag für einen Gegenanschlag am proximalen Ende des Spritzenkörpers versehen ist, wie i) mindestens eine Nocke zum Eingriff in eine Nut am proximalen Ende eines Spritzenkörpers oder ii) mindestens eine Nut in die mindestens eine Nocke am proximalen Ende des Spritzenkörpers eingreift, oder 2) einen nach distal sich aufweitenden Konus aufweist, wobei das Innengewinde des Aufsatzes der Überzugshülle auf ein Außengewinde des Spritzenkörpers drehbar ist.

Dabei kann es in einer Alternative besonders bevorzugt sein, wenn die Überzugshülle integral also werkstoffeinstückig mit dem Auslass als a) Aufsatz, wie beispielsweise eine Applikator-Spitze, b) einem Konnektor, c)Konnektorsystem oder d) einem Lumen, dessen äußerer Umfang aus starrem oder elastischem Material ist, versehen ist.

Entsprechend einer besonders bevorzugten Alternative weist die Überzugshülle proximal einen Aufsatz auf, wobei der Aufsatz proximal innen in der Überzugshülle 1) ein Innengewinde und optional mit einem mechanischen Anschlag für einen Gegenanschlag am proximalen Ende des Spritzenkörpers versehen ist, insbesondere mindestens eine Nocke oder Profil zum Eingriff in eine Nut am proximalen Ende eines Spritzenkörpers oder mindestens eine Nut in die mindestens eine Nocke oder Profil des Spritzenkörpers, oder 2) einen nach distal sich aufweitenden Konus aufweist, wobei das Innengewinde des Aufsatzes auf ein Außengewinde des Spritzenkörpers, insbesondere mit Konnektor, drehbar ist. Passend zum mechanischen Anschlag kann der Spritzenkörper mit Außengewinde einen mechanischen Gegenanschlag aufweisen.

Der Spritzenkörper liegt vorzugsweise in Form einer Hülse vor, die proximal einen Spritzenauslass aufweist und distal zur Aufnahme eines Spritzenstempels ausgebildet ist. Die Spritze, insbesondere eine medizinische Spritze, umfasst einen Spritzenkörper mit proximalem Spritzenauslass, der insbesondere einen Spritzenkolben oder Spritzenstempel aufweist. Zudem ist die Spritze vorzugsweise mit einer flüssigen oder pastösen pharmazeutischen oder dentalen Zusammensetzung, insbesondere zur mehrfachen Applikation, befüllt. Die erfindungsgemäße Spritze umfasst einen Spritzenkörper mit einem zylindrischen Hohlraum und einen in diesem Hohlraum beweglichen Spritzenkolben oder Spritzenstempel. Nach einer bevorzugten Alternative weist der Spritzenkörper am proximalen Ende ein Außengewinde auf und/oder mindestens eine nach proximal verlaufende Nut oder einen nach proximal zulaufenden Konus auf. Dabei kann es bevorzugt sein, dass der proximale Spritzenauslass ein Außengewinde optional mit Anschlag, wie einer Nut oder Nocke aufweist. Des Weiteren kann der Spritzenkörper einen proximalen zylindrischen oder konusförmigen Spritzenauslass aufweisen, der zylinderförmig oder konusförmig als Düse ausgebildet sein kann. Am Spritzenkolben oder Spritzenstempel kann proximal ein flexibles Dichtelement vorgesehen sein.

Im Auslass der Überzugshülle, umfassend einen Aufsatz, einen Konnektor oder eine Kanüle kann vorzugsweise eine für Mikroorganismen undurchlässige Membran oder Filter vorgesehen sein, die Membran oder der Filter weist vorzugsweise Öffnungen kleiner gleich 6 Mikrometer, vorzugsweise um 5 Mikrometer auf.

Nach einer besonders bevorzugten Ausführungsform ist die Schutzhülle eine Überzugshülle, die proximal mindestens einen Konnektor, vorzugsweise ein Konnektorsystem, aufweist, wobei insbesondere (i) die Überzugshülle proximal einen ersten Konnektor aufweist, der mit einem zweiten Konnektor eines weiteren Aufsatzes, wie einer Kanüle oder eines Schlauches, verbindbar ist, und wobei der erste Konnektor vorzugsweise mit dem Spritzenauslass des Spritzenkörper verbindbar, insbesondere steckbar und/oder rastbar ist, oder
(ii) die Überzugshülle weist proximal ein Konnektorsystem auf, wobei das Konnektorsystem einen außen an der Überzugshülle vorgesehenen ersten Konnektor und einen innen in der Überzugshülle vorgesehenen weiteren Konnektor umfasst, die insbesondere miteinander verbunden sind, vorzugsweise bilden der erste und weitere Konnektor eine Steckverbindung oder sind werkstoffeinstückig ausgebildet, wobei der erste Konnektor mit einer Kanüle verbindbar ist und der weitere Konnektor mit dem Spritzenauslass des Spritzenkörpers verbindbar ist. Vorzugsweise ist der jeweilige Konnektor Teil eines Konnektorsystems, insbesondere eines verbindbaren und lösbaren Konnektorsystems, oder
(iii) die Überzugshülle proximal einen ersten Konnektor mit Kanüle, insbesondere integrierter Kanüle, bevorzugt aus einem Kunststoff, aufweist, wobei der Konnektor mit dem Spritzenauslass des Spritzenkörpers verbindbar ist. In einer Alternative sind der Konnektor aus Kunststoff und die Kanüle aus einem Metall oder einer Legierung.

In einer Alternative (iv) kann die Überzugshülle proximal einen Aufsatz aufweisen, wobei der Aufsatz proximal innen in der Überzugshülle ein Innengewinde, mindestens eine Nocke zum Eingriff in eine Nut am proximalen Ende eines Spritzenkörpers oder einen nach distal sich aufweitenden Konus aufweist und die Überzugshülle insbesondere proximal außen einen Aufsatz, eine Applikations-Spritze oder eine Kanüle aufweist.

Der erste Konnektor kann innen als weiblicher Luer-Lock-Anschluss und außen als männlicher Luer-Lock-Anschluss ausgebildet sein. Der weibliche Luer-Lock-Anschluss kann an den männlichen Luer-Lock-Anschluss des Spritzenauslasses des Spritzenkörpers festgelegt, insbesondere angeschlossen werden. Der zweite oder auch der weitere Konnektor kann als weiblicher Luer-Lock-Anschluss ausgebildet sein, um diesen mit dem männlichen Luer-Lock-Anschluss des ersten Konnektors zu verbinden. In einer Alternative kann der Konnektor oder ein Konnektorsystem einen weiblichen und männlichen Konnektor umfassen, wobei einer der Konnektoren mit einer J-förmigen Nut und mit einer korrespondierenden Rastnocke versehen sein kann.

Unter verbindbar wird im Rahmen der Erfindung eine Verbindung zweier vorgenannter Teile verstanden, die dicht gegenüber einem Austritt von Flüssigkeiten verbunden sind und die Verbindung wieder lösbar ist. Die Verbindung kann als Steckverbindung, Rastung, Drehverbindung, Dreh-/Rastverbindung, jegliche Luer-Systeme oder Bajonettverbindung ausgebildet sein.

Der erste Konnektor der Überzugshülle weist eine innenliegende Anschlussgeometrie auf, die über den Spritzenauslass des Spritzenkörpers steckbar ist, oder der erste Konnektor ist als Teil eines Stecksystems ausgebildet, das mit dem Teil eines Stecksystems des Spritzenauslasses des Spritzenkörpers korrespondiert. Nach einer Ausführungsform ist das Konnektorsystem ein Stecksystem, insbesondere umfassend ein Stecksystem, das umfassen kann zwei Hohlkegel, und ein Luer-System, ein Luer-Lock-System, ein rotierendes Luer-Lock-System, einen Bajonettverschluss, einen Schraubverschluss oder ein Stecksystem mit Rastnocke. Daher kann der jeweilige Konnektor ausgebildet sein als Hohlkegel, Teil eines Luer-Systems, Teil eines Luer-Lock-Systems, Teil eines rotierenden Luer-Lock-Systems, Teil eines Bajonettverschlusses, Teil eines Schraubverschlusses oder als Teil eines Stecksystems mit Rastnocke.

Die Kanüle an der Überzugshülle oder die an der Überzugshülle anbringbare Kanüle kann gerade, gerade spitz, gerade stumpf, gebogen spitz oder gebogen stumpf sein. Die Kanüle kann nach proximal verjüngend, insbesondere nach proximal konisch zulaufend ausgebildet sein (= weiblicher eines Luer / Luer-Lock Verschlusses). Zudem kann der Aufsatz oder die Kanüle mit einem Verschluss, wie beispielsweise einer Schutzkappe oder einem Stopfen verschlossen werden.

Ferner kann die Überzugshülle mit dem weiteren Auslass, insbesondere mit dem Konnektor oder dem Konnektorsystem werkstoffeinstückig ausgebildet sein oder die Überzugshülle kann mit dem Konnektor oder dem Konnektorsystem verklebt, verschweißt und/oder aneinander geschrumpft sein. Alternativ kann der Konnektor oder das Konnektorsystem in die Überzugshülle eingesteckt werden, insbesondere in das Lumen mit einem äußeren Umfang aus elastischem Material, insbesondere zähelastischem Material. Das Material der Überzugshülle oder auch nur das Material des äußeren Umfangs um das Lumen kann antibakteriell ausgestattet sein. Zur antibakteriellen Ausstattung des Materials eignen sich insbesondere Octenidin-Salz, wie das Dihydrochlorid und/oder ein Dequalinium-Salz. Octenidin-Salz wird als eine Verbindung mit der dikationischen Bipyridinium-Grundstruktur nach CAS-Nr. 70775-75-6 verstanden. Darunter sollen auch geringfügige Modifikationen an der chemischen Grundstruktur fallen, z.B. mit Variation der zentralen Alkylkette (n = 7 - 13), Variation der terminalen Alkylketten (n = 4 - 12), und Variation der Anionen. Zur Ausbildung der Salze kommen auch Anionen oder Derivate des Octenidins mit polymerisierbaren Gruppen, wie bspw. (Meth)acrylate, sowie Fettsäure-Anionen dieser oder Mischungen davon in Betracht, die in das Material einpolymerisiert werden können. Gleichfalls kann das Material mit Silber-Ionen, Zinkoxid ausgestattet sein. In weiteren Alternativen besteht die Möglichkeit das Material mit Aldehyden auszustatten, wie Glutaraldehyd oder Formaldehyd. Ebenso kann das Material mit mindestens einem Gerbstoff, Saponin, Flavonoid, Alkanoid, Iridoidglykosid, ätherischem Öl und/oder Polysaccharid oder einer Mischung mit mindestens einer der vorgenannten Verbindungen ausgestattet sein. Beispiele umfassen: Gerbstoffe aus der Melisse, Saponine aus Gänseblümchen, Flavonoide aus der Birke, Alkaloide aus der Chinarinde, Iridoidglykoside aus dem Ehrenpreis, ätherische Öle des Eukalyptus, Polysaccharide wie Echinacea, und oder Verbindungen wie Hypericin.

Die Schutzhülle umfassend die Überzugshülle mit einem weiteren Auslass umfassend insbesondere mindestens einen Konnektor oder ein Konnektorsystem, und/oder das Material am äußeren Umfang des Lumens und/oder der Kanüle sind vorzugsweise jeweils unabhängig voneinander aus einem der nachfolgenden Materialien ausgewählt: Kunststoff, insbesondere ein elastischer Kunststoff oder ein formstabiler Kunststoff. Der Kunststoff ist vorzugsweise transparent oder opaque. Der Kunststoff umfasst vorzugsweise Polymere, Co-Polymere, Polymerblends, die jeweils ungefüllt oder gefüllt sein können. Das Material, insbesondere der jeweilige Kunststoff, kann vorzugsweise antibakteriell, viruzid, mikrobizid und/oder fungizid ausgestattet sein. Bevorzugte Kunststoffe umfassen Polyethylen, Polypropylen, Polyacrylate, Polylactid, Poly(3-hydroxybutyrate-co-3-hydroxyvalerate) (PHBV), sowie Polymere von Polyacrylaten, Cyanacrylat, Polyamide, BPT, Bisphenol-1,2,3-triazol oder Derivate davon, Bisphenol-1,2,3-triazole cyanate ester (BPTCE), Latex, Natur-Latex, Nitril, Vinyl oder PVC. Grundsätzlich bevorzugt sind alle Polymere oder Polymerblends, die als Verpackungsmaterial für den Bereich der Medizintechnik zugelassen sind und dem Fachmann daher geläufig sind. Des Weiteren kann die Überzugshülle aus einer polymeren Folie, insbesondere einer dehnbaren bzw. elastischen polymeren Folie oder einem elastischen Schlauch aus einem Polymer gefertigt sein. Besonders bevorzugte Kunststoffe umfassen alle bioabbaubaren Kunststoffe, wie bakteriell abbaubare Kunststoffe. Hier sind insbesondere Polylactid oder PHBV zu nennen.

Ferner weist die Überzugshülle im distalen Bereich eine umlaufende Dichtlippe, insbesondere eine innen in der Überzugshülle ausgebildete Dichtlippe oder eine Dichtlippe in Form eines Dichtrings, wie eines O-Rings, auf, wobei die Dichtlippe a) im Bereich unterhalb des Spritzengriffs am Spritzenkörper dicht anliegt oder
b) im Bereich unterhalb des Griffes einer Spritzenhalterung zur Aufnahme mindestens eines Spritzenkörpers dicht anliegt, insbesondere wenn die Überzugshülle außen um den Spritzenkörper oder die Halterung für den Spritzenkörper angebracht ist oder c) den Griff des Spritzenkörpers oder den Griff der Spritzenhalterung umschließt.

Die Überzugshüllen sind jeweils in der Länge und im Durchmesser an die aufzunehmenden Spritzenkörper der Spritzen oder eine aufzunehmende Spritzenhalterung angepasst, bzw. anpassbar.

Die Überzugshülle weist im distalen Bereich eine umlaufende Dichtlippe auf. Die Dichtlippe ist vorzugsweise innen umlaufend in der Überzugshülle und/oder umlaufend am distalen Ende der Überzugshülle ausgebildet. Die Dichtlippe kann vorzugsweise unterhalb des Griffes des Spritzenkörpers enganliegend zu liegen kommen. Zur Ausbildung der Dichtlippe kann in diesem Bereich das Material der Überzugshülle verstärkt ausgeführt sein oder es kann eine separate Dichtlippe an die Überzugshülle angeformt sein. Die Dichtlippe ist vorzugsweise ein medizinisch verträgliches elastisches Material, wie vorzugsweise ein Silikongummi.

Ebenfalls kann eine erfindungsgemäße Überzugshülle zur Aufnahme zweier Spritzenkörper, die vorzugsweise in einer Spritzenhalterung angeordnet sind, ausgebildet sein. Zudem weist die Überzugshülle vorzugsweise im distalen Bereich eine umlaufende Dichtlippe auf, die unterhalb des Griffes der beiden Spritzenkörper oder unterhalb des Griffes des Spritzenhalters enganliegend zu liegen kommt, wenn die Überzugshülle über die beiden Spritzenkörper und die Spritzenhalterung gezogen ist.

Gleichfalls Gegenstand der Erfindung ist ein Kit umfassend mindestens eine Schutzhülle, insbesondere 1 bis 100 Schutzhüllen, vorzugsweise 1 bis 20 Schutzhüllen, wobei jede Schutzhülle eine Überzugshülle ist, die außen um den Spritzenkörper der Spritze anbringbar ist, und mindestens eine Spritze. Nach einer bevorzugten alternativen Ausführungsform kann der Spritzenkörper der Spritze am proximalen Ende ein Außengewinde aufweisen oder mindestens eine nach proximal verlaufende Nut, vorzugsweise mindestens zwei Nuten oder einen nach proximal zulaufenden Konus, wobei ein Außengewinde bevorzugt ist.

In bevorzugten Ausführungsformen enthält die Spritze, insbesondere der Spritzenkörper der Spritze, eine flüssige oder pastöse pharmazeutische oder dentale Zusammensetzung, insbesondere dentale pastöse fließfähige Zusammensetzungen, dentalen Fissurenversiegler, Gingiva-Retraktionspaste, Adstringenz, dentalen Kleber, selbstätzendes Adhäsiv, Gewebekleber, insbesondere Cyanacrylat-Hautkleber, Kleberproteinlösung, Thrombinlösung mit Kalciumchlorid, pharmazeutischen Wirkstoff, wie Anästhetikum, vorzugsweise Lidocain oder Procain, oder ein Antibiotikum. Als dentale pastöse fließfähige Zusammensetzungen gelten insbesondere die im Dentalbereich gebräuchlichen Zusammensetzungen der sogenannten fließfähigen Dentalmaterialien, Venus^{®} Flow, Venus Diamond Flow.

Die Spritze mit Spritzenkörper kann vorzugsweise am proximalen Ende ein Außengewinde aufweisen oder mindestens eine nach proximal verlaufende Nut, vorzugsweise mindestens zwei Nuten oder einen nach proximal zulaufenden Konus.

Vorzugsweise weist der Spritzenkörper proximal als Spritzenauslass oder am proximalen Ende einen eigenen Konnektor zum Festlegen bzw. Befestigen einer Kanüle oder einer Applikationsleitung oder Entnahmeleitung auf.

Die Schutzhülle, insbesondere die Überzugshülle ist vorzugsweise einzeln steril verpackt. In weiteren Alternativen kann die Schutzhülle in einem Mehrfachdosierbehälter bevorratet sein, aus dem die Schutzhüllen vorzugsweise einzeln steril entnehmbar sind. Nach einer weiteren Alternative ist Gegenstand der Erfindung ein steril verpacktes Kit umfassend 1 bis 25 Schutzhüllen und mindestens eine Spritze.

Die Spritze oder auch die Schutzhülle können jeweils unabhängig einen Kanülenschutz in Form einer Schutzkappe aufweisen. Alternativ können die Kanülen in eine Matrix eingesteckt sein.

Die nachfolgenden Figuren erläutern die Erfindung näher, ohne die Erfindung auf die Ausführungsbeispiele zu beschränken.

Die Figuren stellen dar:
- Figur 1a, 1b:: Eine Spritze **1** mit Spritzenkörper **5** mit Flügeln **6** und Spritzenkolben **7** gemäß dem Stand der Technik mit Spritzenauslass **11** einem Aufsatz **2** in Form einer Kanüle **2a.**
- Figur 2a, 2b:: Spritze **1** mit Schutzhülle **3** mit weiterem Auslass **14** in Form eines Konnektors **4** oder Konnektorsystems **4a.**
- Figur 3:: Spritze **1** mit Schutzhülle **3** mit Konnektorsystems **4a.**
- Figur 4a, 4b, 4c, 4d, 4e:: Schutzhüllen **3** mit Konnektoren **4, 4b** und mit Dichtungslippe **8.** (Fig. 4b und 4c)
- Figur 5a, 5b:: Spritzenhalterung **9** zur Aufnahme einer Spritze **1** mit Schutzhülle **3** in Fig. 5b und Kanüle **2a.**
- Figur 6a, 6b:: Schutzhülle **3** in Form einer Überzugshülle mit weiterem Auslass **14** in Form eines mit Konnektorsystems **4a** (Fig. 6a) oder eines Lumens **10.**

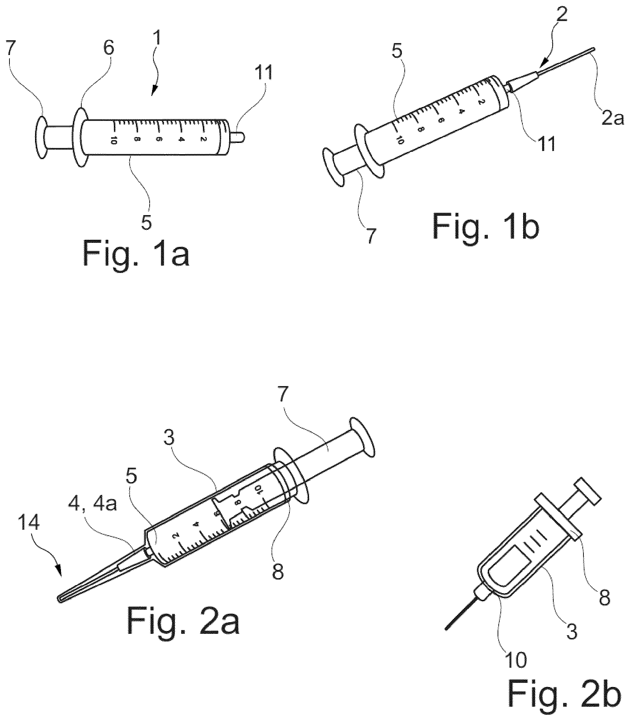

In den **Figuren 1a** und **1b** werden Spritzen **1** nach dem Stand der Technik offenbart. Die Spritzen **1** weisen einen Spritzenkörper **5** mit Flügeln **6** und einem Spritzenkolben oder Spritzenstempel **7** auf. Am Spritzenauslass **11** des Spritzenkörpers kann als ein Aufsatz **2** eine Kanüle **2a** aufgesteckt sein. Eine erfindungsgemäße Schutzhülle **3** in Form einer Überzugshülle **3** mit proximalem weiterem Auslass **14** wird in den Figuren **2a** und **2b** dargestellt. Der weitere Auslass **14** ist als proximaler Konnektor **4,** der insbesondere auch als Konnektorsystem **4a** vorliegen kann, ausgebildet. Die Überzugshülle **3** ist von proximal über den Spritzenkörper **5** gezogen und wird von einer Dichtlippe **8,** die am distalen Ende der Überzugshülle angebracht ist, dicht am Spritzenkörper gehalten.

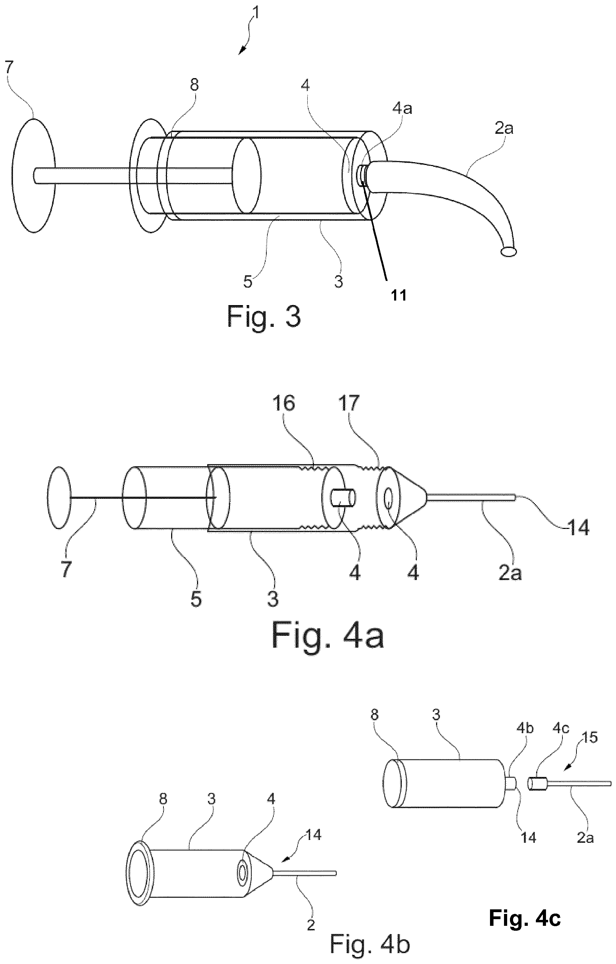

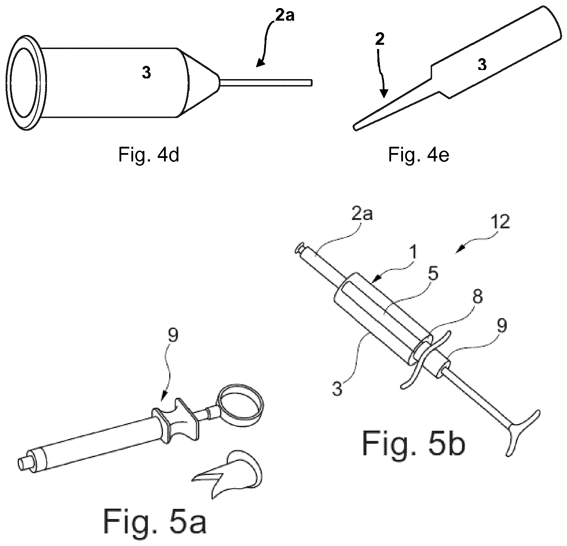

In den Figuren **3** und **4a** werden zwei Ausführungsvarianten von Schutzhüllen **3,** insbesondere Überzugshüllen **3** mit weiterem Auslass **14,** für Spritzenkörper **3** einer Spritze **1** mit Spritzenstempel **7,** dargestellt. Die Überzugshülle **3** weist eine distale Dichtlippe **8** und ein Konnektorsystem **4a** auf. Über das Konnektorsystem wird einerseits die Überzugshülle am Spritzenauslass **11** des Spritzenkörpers **5** befestigt und andererseits kann eine Kanüle **2a** oder eine Applikations-Spitze außen und proximal an das Konnektorsystem **4a** separat befestigt werden. Diese Ausführung mit Konnektorsystem **4a** erlaubt die spätere Auswahl von verschiedenen Aufsätzen, die umfassen können: eine gerade oder gebogene Kanüle **2a,** oder Entnahme-/Zuspritz-Spike für Mehrdosenbehälter, Safe-Flow-Ventil, Applikations-/ Entnahmeleitung oder Ein-/Mehrweghahn. In Figur **4a** wird zudem eine Überzugshülle mit proximalem Innengewinde **17** und Konnektor **4** und weiterem Auslass **14** in Form einer Kanüle **2a** dargestellt, wobei das Innengewinde **17** auf das Außengewinde **16** des Spritzenkörper **5** mit Konnektor **4** gedreht werden kann, um die Überzugshülle **3** mit dem Spritzenkörper **5** fest zu verbinden. Die Dichtlippe **8** ist in Figur **4b** als Silikondichtungsring ausgebildet. In den Figuren **4b** und **4c** sind weitere Schutzhüllen **3** als Überzugshüllen **3** mit Dichtlippe **8** dargestellt. In Figur **4b** ist proximal in der Überzugshülle als Konnektor **4** ein proximales nach innen gerichtetes Außengewinde dargestellt, über das die Überzugshülle an dem Spritzenkörper befestigt werden kann. In Figur **4c** ist die Überzugshülle 3 mit einem ersten Konnektor **4b** versehen, wobei der Konnektor **4b** an seiner distalen Seite mit einem Spritzenauslass (nicht dargestellt) verbindbar ist und an seiner proximalen Seite den weiteren Auslass **14** bildet, der mit einem weiteren Konnektor **4c** eines weiteren Aufsatzes **15,** wie mit dem Konnektor **4c** der Kanüle **2a** verbindbar ist. Die Figuren **4d** und **4e** stellen dar Schutzhüllen, insbesondere Überzughüllen **3** mit Aufsatz **2,** insbesondere Kanüle **2a.**

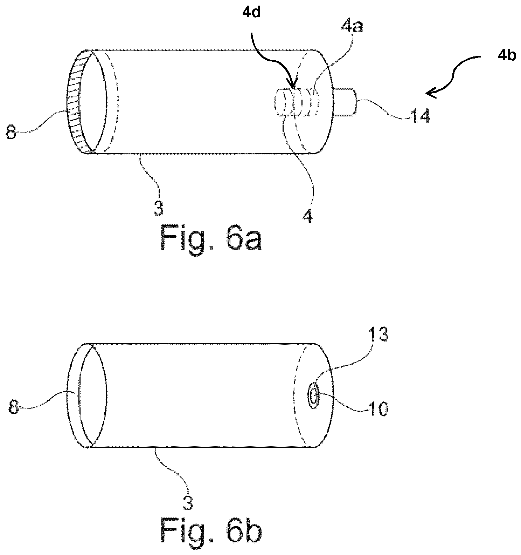

Die Figuren **5a** und **5b** stellen dar, eine Spritzenhalterung **9** zur Aufnahme einer Spritze **1,** die in Figur **5b** mit Schutzhülle **3** dargestellt ist. Die Schutzhülle **3** in Form einer Überzugshülle **3** ist mit einer Kanüle **2a** versehen. Die Spritze **1** und die Überzugshülle **3** bilden das erfindungsgemäße Kit **12.** Die Überzugshülle **3** kann integral mit einem als Aufsatz, Konnektor, Konnektorsystem, Lumen oder als Kanüle **2a** ausgebildeten Auslass **14** (Fig. 6a) versehen sein. In den Figuren **6a** und **6b** sind Überzugshüllen **3** mit Dichtlippe **8** dargestellt, wobei der Auslass **14** der Überzugshülle **3** in Figur **6a** in Form eines Konnektorsystems **4a** mit einem proximal innenliegenden Konnektor **4d** und einem proximal nach außen weisenden Konnektor **4b** dargestellt ist. In Figur **6b** ist der Auslass **14** ein proximal in der Überzugshülle vorgesehenes Lumen **10** mit einem flexiblen Material **13** am äußeren Umfang des Lumens.

### Bezugszeichen

**1** Spritze
**2** Aufsatz, insbesondere Kanüle **2a**
**3** Schutzhülle für eine Spritze, insbesondere Überzugshülle **3**
**4** Konnektor oder Konnektorsystem **4a,** erster Konnektor **4b,** zweiter Konnektor eines weiteren Aufsatzes **4c,** weiterer Konnektor **4d,**
**5** Spritzenkörper
**6** Flügel oder Griff am Spritzenkörper
**7** Spritzenkolben/Spritzenstempel
**8** Dichtlippe
**9** Spritzenhalterung
**10** Lumen
**11** Spritzenauslass
**12** Kit
**13** Material äußerer Umfang des Lumens
**14** weiterer Auslass
**15** weiteren Aufsatzes bspw. Kanüle
**16** Spritzenkörper mit Außengewinde am proximalen Ende
**17** Innengewinde proximal im Aufsatz innen in der Überzugshülle

## Patentansprüche

1. Schutzhülle (3) für eine Spritze (1) mit Spritzenkörper (5) und einem proximalen Spritzenauslass (11), wobei die Schutzhülle (3) eine Überzugshülle (3) ist, die außen um den Spritzenkörper (5) anbringbar ist, wobei an der Überzugshülle (3) proximal ein weiterer Auslass (14) ausgebildet ist umfassend
a) einen Aufsatz (2), wobei die Überzugshülle proximal den Aufsatz (2) aufweist, wobei der Aufsatz proximal innen in der Überzugshülle 1) ein Innengewinde (17) und einen mechanischen Anschlag für einen Gegenanschlag am proximalen Ende des Spritzenkörpers aufweist, oder 2) einen nach distal sich aufweitenden Konus aufweist, wobei das Innengewinde (17) auf ein Außengewinde (16) des Spritzenkörpers (5) drehbar ist,
b) Konnektor (4),
c) Konnektorsystem (4a),
d) Lumen (10), dessen äußerer Umfang (13) aus elastischem Material ist, oder
e) eine Kanüle (2a),
**dadurch gekennzeichnet, dass** die Überzugshülle (3) im distalen Bereich eine umlaufende Dichtlippe aufweist.

2. Schutzhülle nach Anspruch 1, **dadurch gekennzeichnet, dass** die Überzugshülle (3) proximal mindestens einen Konnektor (4), insbesondere ein Konnektorsystem (4a), aufweist, wobei insbesondere (i) die Überzugshülle proximal einen ersten Konnektor (4b) aufweist, der mit einem zweiten Konnektor (4c) eines weiteren Aufsatzes (15) verbindbar ist, und wobei der erste Konnektor (4b) vorzugsweise über den Spritzenauslass (11) des Spritzenkörpers steckbar ist oder mit diesem verbindbar ist, oder
(ii) die Überzugshülle (3) weist proximal ein Konnektorsystem (4a) auf, wobei das Konnektorsystem (4a) einen außen an der Überzugshülle vorgesehenen ersten Konnektor (4b) und einen innen in der Überzugshülle vorgesehenen weiteren Konnektor (4d) umfasst, wobei der erste Konnektor (4b) mit einer Kanüle (2a) verbindbar ist und der weitere Konnektor (4d) mit dem Spritzenauslass (11) des Spritzenkörpers (5) verbindbar ist, oder
(iii) die Überzugshülle proximal einen ersten Konnektor (4b) mit Kanüle (2a) aufweist, wobei der Konnektor (4b) mit dem Spritzenauslass (11) des Spritzenkörpers verbindbar ist, oder
(iv) die Überzugshülle proximal einen Aufsatz (2) aufweist, wobei der Aufsatz proximal innen in der Überzugshülle ein Innengewinde (17), mindestens eine Nocke zum Eingriff in eine Nut am proximalen Ende eines Spritzenkörpers oder einen nach distal sich aufweitenden Konus aufweist und die Überzugshülle, insbesondere proximal außen einen Konnektor, ein Lumen oder eine Kanüle (2a) aufweist.

3. Schutzhülle nach Anspruch 1 oder 2, **dadurch gekennzeichnet, dass** der jeweilige Konnektor (4) Teil eines Konnektorsystems (4a) ist.

4. Schutzhülle nach einem der Ansprüche 1 bis 3, **dadurch gekennzeichnet, dass** das Konnektorsystem ein Stecksystem oder der Konnektor Teil eines Stecksystems ist, insbesondere umfassend ein Stecksystem umfassend zwei Hohlkegel, Luer-System, Luer-Lock-System, rotierendes Luer-Lock-System, Bajonettverschluss, Schraubverschluss oder ein Stecksystem mit Rastnocke.

5. Schutzhülle nach einem der Ansprüche 1 bis 4, **dadurch gekennzeichnet, dass** die Überzugshülle mit dem Konnektor (4) oder dem Konnektorsystem (4a) werkstoffeinstückig ausgebildet ist oder die Überzugshülle mit dem Konnektor (4) oder dem Konnektorsystem (4a) verklebt, verschweißt und/oder aneinander geschrumpft ist oder der Konnektor oder das Konnektorsystem in die Überzugshülle eingesteckt wird.

6. Schutzhülle nach einem der Ansprüche 1 bis 5, **dadurch gekennzeichnet, dass** das Material der Überzugshülle, des Konnektors, des Konnektorsystems und/oder das Material am äußeren Umfang (13) des Lumens (10) ein Kunststoff ist, insbesondere ein elastischer Kunststoff oder ein formstabiler Kunststoff.

7. Schutzhülle nach einem der Ansprüche 1 bis 6, **dadurch gekennzeichnet, dass** die Überzugshülle zur Aufnahme zweier Spritzenkörper, die vorzugsweise in einer Spritzenhalterung angeordnet sind, ausgebildet ist.

8. Schutzhülle nach einem der Ansprüche 1 bis 7, **dadurch gekennzeichnet, dass**
die Dichtlippe
a) im Bereich unterhalb des Spritzengriffs am Spritzenkörper (5) dicht anliegt, oder
b) im Bereich unterhalb des Griffes einer Spritzenhalterung zur Aufnahme des mindestens einen Spritzenkörpers (5) dicht anliegt, insbesondere wenn die Überzugshülle (3) außen um den Spritzenkörper (5) oder die Halterung für den Spritzenkörper angebracht ist, oder
c) den Griff des Spritzenkörpers (5) oder den Griff der Spritzenhalterung umschließt.

9. Schutzhülle nach einem der Ansprüche 1 bis 8, **dadurch gekennzeichnet, dass** das Material der Schutzhülle umfassend die Überzugshülle und den proximalen Auslass (14), zumindest in Teilbereichen antibakteriellen und/oder antiviral ausgestattet ist, insbesondere ist die Überzugshülle und/oder der proximale Auslass (14) antibakteriell und/oder antiviral ausgestattet sind, bevorzugte Verbindungen zur antibakteriellen und/oder antiviralen Ausstattung des Materials umfassend mindestens ein Octenidin-Salz, wie das Dihydrochlorid und/oder ein Dequalinium-Salz sowie Fettsäure-Anionen dieser oder Mischungen davon, Silber-Ionen oder Zinkoxid, Gerbstoffe, Saponine, Flavonoide, Alkanoide, Iridoidglykoside, ätherische Öle und/oder Polysaccharide oder Mischungen mit mindestens einer der vorgenannten Verbindungen.

10. Kit (12) umfassend mindestens eine Schutzhülle nach einem der Ansprüche 1 bis 9 und mindestens eine Spritze (1) mit Spritzenkörper (5) und einem proximalen Spritzenauslass (11).

11. Kit (12), nach Anspruch 10, wobei der Spritzenkörper der Spritze am proximalen Ende ein Außengewinde (16), mindestens eine nach proximal verlaufende Nut oder einen nach proximal zulaufenden Konus aufweist.

12. Kit (12) nach Anspruch 10, **dadurch gekennzeichnet, dass** die Spritze eine flüssige oder pastöse pharmazeutische oder dentale Zusammensetzung enthält, insbesondere eine dentale pastöse fließfähige Zusammensetzung, Fissurenversiegler, Gingiva-Retraktionspaste, Adstringenz, einen dentalen Kleber, ein selbstätzendes Adhäsiv, einen Gewebekleber, insbesondere Cyanacrylat- Hautkleber, Kleberproteinlösung, Thrombinlösung mit Kalziumchlorid, pharmazeutischen Wirkstoff, wie ein Anästhetikum oder Antibiotika.

## Claims

1. Protective cover (3) for a syringe (1) having a syringe body (5) and a proximal syringe outlet (11), the protective cover (3) being a slip cover (3) that is attachable outside around the syringe body (5),
wherein a further outlet (14) is formed proximally at the slip cover (3) comprising
a) an attachment (2), the slip cover proximally having the attachment (2), the attachment having proximally inside the slip cover 1) an inside thread (17) and a mechanical stop for a counter stop at the proximal end of the syringe body, or 2) a cone widening towards distal, the inside thread (17) being screwable onto an outside thread (16) of the syringe body (5),
b) connector (4),
c) connector system (4a),
d) lumen (10), the outer periphery (13) of which being made of an elastic material, or
e) a cannula (2a),
**characterised in that** the slip cover (3) has a circumferential sealing lip in the distal region.

2. Protective cover according to claim 1, **characterised in that** the slip cover (3) proximally has at least one connector (4), in particular a connector system (4a), wherein in particular
(i) the slip cover proximally has a first connector (4b) that is connectable to a second connector (4c) of a further attachment (15), and the first connector (4b) preferably being pluggable over the syringe outlet (11) of the syringe body or connectable to it, or
(ii) the slip cover (3) proximally has a connector system (4a), the connector system (4a) comprising a first connector (4b) provided outside at the slip cover and a further connector (4d) provided inside the slip cover, the first connector (4b) being connectable to a cannula (2a) and the further connector (4d) being connectable to the syringe outlet (11) of the syringe body (5), or
(iii) the slip cover proximally has a first connector (4b) having a cannula (2a), the connector (4b) being connectable to the syringe outlet (11) of the syringe body, or
(iv) the slip cover proximally has an attachment (2), the attachment having proximally inside the slip cover an inside thread (17), at least one cam for engaging into a notch at the proximal end of a syringe body or a cone widening towards distal, and the slip cover, in particular proximally outside, having a connector, a lumen or a cannula (2a).

3. Protective cover according to claim 1 or 2, **characterised in that** the respective connector (4) is part of a connector system (4a).

4. Protective cover according to any one of claims 1 to 3, **characterised in that** the connector system is a plug system or the connector is part of a plug system, in particular comprising a plug system comprising two hollow cones, Luer system, Luer Lock system, rotating Luer Lock system, bayonet catch, screw plug, or a plug system with a latch cam.

5. Protective cover according to any one of claims 1 to 4, **characterised in that** the slip cover is integrally formed with the connector (4) or the connector system (4a), or the slip cover is glued, welded and/or shrink together with the connector (4) or the connector system (4a), or the connector or the connector system is plugged into the slip cover.

6. Protective cover according to any one of claims 1 to 5, **characterised in that** the material of the slip cover, of the connector, of the connector system and/or the material at the outer periphery (13) of the lumen (10) is a plastic, in particular an elastic plastic or a dimensionally stable plastic.

7. Protective cover according to any one of claims 1 to 6, **characterised in that** the slip cover is adapted to receive two syringe bodies that are preferably arranged in a syringe holder.

8. Protective cover according to any one of claims 1 to 7, **characterised in that** the sealing lip
a) sealingly fits the region below the syringe grip at the syringe body (5), or
b) sealingly fits the region below the grip of a syringe holder to receive the at least one syringe body (5), in particular when the slip cover (3) being arranged outside around the syringe body (5) or the holder for the syringe body, or
c) encompasses the grip of the syringe body (5) or the grip of the syringe holder.

9. Protective cover according to any one of claims 1 to 8, **characterised in that** the material of the protective cover comprising the slip cover and the proximal outlet (14), is antibacterially and/or antivirally equipped at least in partial regions, in particular the slip cover and/or the proximal outlet (14) are antibacterially and/or antivirally equipped, preferred compounds for antibacterial and/or antiviral equipment of the material comprises at least one octenidine salt, such as the dihydrochloride and/or a dequalinium salt as well as their fatty acid anions or mixtures thereof, silver ions or zinc oxide, tanning agents, saponins, flavonoids, alkanoids, iridoid glycosides, essential oils and/or polysaccharides, or mixtures with at least one of the afore-mentioned compounds.

10. Kit (12) comprising at least one protective cover according to any one of claims 1 to 9 and at least one syringe (1) having a syringe body (5) and a proximal syringe outlet (11).

11. Kit (12), according to claim 10, wherein the syringe body of the syringe at the proximal end has an outside thread (16), at least one notch running towards proximal, or a cone tapering towards proximal.

12. Kit (12) according to claim 10, **characterised in that** the syringe contains a liquid or pasty pharmaceutical or dental composition, in particular a dental pasty flowable composition, fissure sealant, gingiva retraction paste, astringent, a dental glue, a self-etching adhesive, a tissue adhesive, in particular cyan acrylate skin adhesive, gluten protein solution, thrombin solution with calcium chloride, pharmaceutical active agent, such as an anaesthetic or antibiotics.

## Revendications

1. Gaine protectrice (3) pour une seringue (1) ayant un corps de seringue (5) et une sortie de seringue (11) proximale, la gaine protectrice (3) étant un gaine de recouvrement (3) qui est attachable à l'extérieur autour du corps de seringue (5),
selon laquelle une autre sortie (14) est formée proximalement à la gaine de recouvrement (3) comprenant
a) un embout (2), la gaine de recouvrement ayant proximalement l'embout (2), l'embout ayant proximalement à l'intérieure de la gaine de revêtement 1) un filetage intérieur (17) et une butée mécanique pour une contre-butée à l'extrémité proximale du corps de seringue, ou 2) un cône élargissant vers distale, le filetage intérieur (17) étant vissable sur un filetage extérieur (16) du corps de seringue (5),
b) un connecteur (4),
c) un système connecteur (4a),
d) un lumen (10), dont la périphérie extérieure (13) étant faite d'un matériau élastique, ou
e) une canule (2a),
**caractérisée en ce que** la gaine de revêtement (3) a une lèvre d'étanchéité circulante dans la région distale.

2. Gaine protectrice selon la revendication 1, **caractérisée en ce que** la gaine de recouvrement (3) a proximalement au moins un connecteur (4) en particulier un système connecteur (4a), selon laquelle en particulier (i) la gaine de recouvrement a proximalement un premier connecteur (4b) qui est connectable à un deuxième connecteur (4c) d'un autre embout (15), et le premier connecteur (4b) étant de préférence enfichable sur la sortie de seringue (11) du corps de seringue ou connectable à ladite, ou (ii) la gaine de recouvrement (3) a proximalement un système connecteur (4a) la système connecteur (4a) comprenant un premier connecteur (4b) fourni à l'extérieur à la gaine de recouvrement et un autre connecteur (4d) fourni à l'intérieur de la gaine de recouvrement, le premier connecteur (4b) étant connectable à une canule (2a) et l'autre connecteur (4d) étant connectable à la sortie de seringue (11) du corps de seringue (5), ou
(iii) la gaine de recouvrement a proximalement un premier connecteur (4b) ayant une canule (2a), le connecteur (4b) étant connectable à la sortie de seringue (11) du corps de seringue, ou
(iv) la gaine de recouvrement a proximalement un embout (2), l'embout ayant proximalement à l'intérieur de la gaine de recouvrement un filetage intérieur (17), au moins une came pour intervenir dans une encoche à l'extrémité proximale d'un corps de seringue ou un cône élargissant vers distale, et la gaine de recouvrement, en particulier proximalement à l'extérieur, ayant un connecteur, un lumen ou un canule (2a).

3. Gaine protective selon la revendication 1 ou 2, **caractérisée en ce que** le connecteur (4) respectif est une partie d'un système connecteur (4a).

4. Gaine protective selon l'une des revendications 1 à 3, **caractérisée en ce que** le système connecteur est un système à enficher ou le connecteur est une partie d'un système à enficher, en particulier comprenant en système à enficher comprenant deux cône creux, un système Luer, un système Luer-Lock, un système rotatif Luer-Lock, une verrouillage par baïonnette, une bouchon fileté, ou un système à enficher avec une came d'encliquetage.

5. Gaine protective selon l'une des revendications 1 à 4, **caractérisée en ce que** la gaine de recouvrement est formée intégralement avec le connecteur (4) ou le système connecteur (4a), ou la gaine de recouvrement est collée, soudée et/ou rétrécie ensemble avec le connecteur (4) ou le système connecteur (4a), ou le connecteur du système connecteur est enfiché dans la gaine de recouvrement.

6. Gaine protective selon l'une des revendications 1 à 5, **caractérisée en ce que** le matériau de la gaine de recouvrement, du connecteur, du système connecteur et/ou le matériau à la périphérie extérieure (13) du lumen (10) est un plastique, en particulier un plastique élastique ou un plastique à stabilité dimensionnelle.

7. Gaine protective selon l'une des revendications 1 à 6, **caractérisée en ce que** la gaine de recouvrement est adaptée à recevoir deux corps de seringue qui sont arrangés de préférence dans un support de seringue.

8. Gaine protective selon l'une des revendications 1 à 7, **caractérisée en ce que** la lèvre d'étanchéité
a) correspond étanchement à la région dessous la poignée de seringue au corps de seringue (5), ou
b) correspond étanchement à la région dessous la poignée d'un support de seringue pour recevoir l'au moins un corps de seringue (5), en particulier lorsque la gaine de recouvrement (3) étant arrangée à l'extérieur autour du corps de seringue (5) ou du support pour le corps de seringue, ou
c) entoure la poignée du corps de seringue (5) ou la poignée du support de seringue.

9. Gaine protective selon l'une des revendications 1 à 8, **caractérisée en ce que** le matériau de la gaine protective comprenant la gaine de recouvrement et la sortie (14) proximale est équipée de manière antibactérienne et/ou antivirale au moins dans des régions partiales, en particulière la gaine de recouvrement et/ou la sortie (14) proximale sont équipées de manière antibactérienne et/ou antivirale, des composés préférés pour l'équipement antibactérien et/ou antiviral du matériau comprennent au moins un sel d'octénidine, tel que le dihydrochlorure et/ou un sel de déqualinium ainsi que leurs anions d'acides gras ou des mélanges desquels, des ions argent ou de l'oxyde de zinc, des agents tannants, des saponines, des flavonoïdes, des alcanoïdes, des glycosides d'iridoïdes, des huiles essentielles et/ou des polysaccharides, ou des mélanges avec au moins un des composés susmentionnés.

10. Kit (12) comprenant au moins une gaine protective selon l'une des revendications 1 à 9, et au moins un seringue (1) ayant un corps de seringue (5) et une sortie de seringue (11) proximale.

11. Kit (12), selon la revendications 10, selon lequel le corps de seringue de la seringue à l'extrémité proximale a un filetage extérieur (16), au moins un encoche s'étendant vers proximale, ou un cône se rétrécissant vers proximale.

12. Kit (12) selon la revendication 10, **caractérisé en ce que** la seringue contient une composition dentaire ou pharmaceutique liquide ou pâteuse, en particulière une composition dentaire pâteux fluide, scellant de fissures, pâte de rétraction de la gencive, astringence, une colle dentaire, un adhésif auto-mordançant, un adhésif tissulaire, en particulier adhésif cutané à acrylate de cyan, solution de protéine de gluten, solution de thrombine avec chlorure de calcium, agent actif pharmaceutique, tel qu'un anesthétique ou antibiotiques.
